# EUROPEAN PATENT SPECIFICATION

(11) **EP 4 364 962 B1**
(45) Date of publication and mention of the grant of the patent: **31.12.2025**
(21) Application number: 21948479.7
(22) Date of filing: 02.11.2021
(51) Int. Cl.: B60C 13/00, B60C 19/00

(54) **TIRE**
REIFEN
PNEUMATIQUE

(30) Priority: 30.06.2021 JP 2021109732
(43) Date of publication of application: 08.05.2024
(73) Proprietor: BRIDGESTONE CORPORATION, Chuo-ku Tokyo 104-8340 (JP)
(72) Inventor: HASHIMOTO, Masayuki, Tokyo 104-8340 (JP); SUMITOMO, Kenta, Tokyo 104-8340 (JP); OSAKA, Takashi, Tokyo 104-8340 (JP)
(74) Representative: Marks & Clerk LLP
(86) International application number: PCT/JP2021/040451
(87) International publication number: WO 2023/276176

(56) References cited:
- EP-A1- 3 760 456
- JP-A- 2011 121 587
- JP-A- 2014 218 096
- JP-A- 2016 037 236
- JP-A- 2020 055 459
- JP-A- 2020 079 041
- JP-A- H0 616 017
- JP-A- S5 914 502
- KR-B1- 101 059 589
- US-A1- 2020 108 676

## Description

### TECHNICAL FIELD

The present invention relates to a tire.

This application claims priority based on Patent Application No. 2021-109732 filed in Japan on June 30, 2021.

### BACKGROUND

It has been conventionally known to install a communication device, such as a sensor that detects the internal condition of the tire, such as tire air pressure, or an RFID tag with a memory section that can store unique identification information of the tire, etc., on the inner surface of the tire, or to embed such a device inside the tire. For example, a sensor as a communication device can be used to determine the condition of the tire during driving, and various tire information obtained from the memory section of the RFID tag as a communication device can be used for maintenance services and other purposes.

For example, Patent Document 1 discloses a tire in which RFID tags are disposed between carcass plies and other components.
Patent Document 2 discloses a tire that is rotatable about an axis of rotation in a circumferential direction and has a carcass ply, a shoulder region, a sidewall region and an electromagnetic transmitting and receiving device. The carcass insert borders on the sidewall area. The sidewall region includes a reinforcing component, a first sidewall component, and a second sidewall component. The first sidewall component and the second sidewall component form a sidewall component region.
Patent Document 3 discloses an RFID tag embedded tire which comprise a topping rubber on an RFID tag. A first topping rubber topped in the outer direction of the tire is formed of a rubber composition having a dielectric constant different from that of a second topping rubber topped in the tire inner direction of the RFID tag.
Patent Document 4 discloses a tire including a bead filler extending to an outer side in the tire-radial direction of a bead core, a carcass ply folded around the bead core, a steel chafer arranged so as to cover the carcass ply around the bead core, a first pad covering an outer side in the tire-width direction of a folding end of the carcass ply at the outer side in the tire-radial direction of the end part of the steel chafer, a second pad covering an outer side in the tire-width direction of the first pad and side wall rubber covering at least part of the outer side in the tire-width direction of the second pad. An electronic component is provided between the second pad and the side wall rubber.

### CITATION LIST

### Patent Literature

PTL 1: JP 2020-55450A
PTL 2: EP 3760456A1
PTL 3: KR101059589B1
PTL 4: US2020/108676A1

### SUMMARY

### (Technical Problem)

However, in the tire described in Patent Document 1, the RFID tag is in contact with the carcass plies, so deformation of the carcass plies during tire rolling affects the RFID tag, and the durability of the RFID tag may be compromised.

### (Solution to Problem)

The purpose of this invention is to solve the aforementioned problems and to provide a tire that can ensure sufficient durability of a communication device.

The tire of this invention is a tire according to claim 1.

### (Advantageous Effect)

The present invention can provide a tire that can ensure sufficient durability of a communication device.

### BRIEF DESCRIPTION OF THE DRAWINGS

In the accompanying drawings:
FIG. 1 is a cross-sectional view in the tire width direction (half view) of the tire of each embodiment of the present invention, when mounted on the applicable rim;
FIG.2 is a perspective view of an RF tag as a communication device to be disposed on the tire of this embodiment;
FIG.3A is a schematic cross-sectional view in the tire circumferential direction of the tire to illustrate the behavior of the cords of the carcass plies during tire rolling, in particular, the tire in reference condition is illustrated; and
FIG.3B is a schematic cross-sectional view in the tire circumferential direction of the tire to illustrate the behavior of the cords of the carcass plies during tire rolling, in particular, the tire during tire rolling under a predetermined load is illustrated.

### DETAILED DESCRIPTION

The tire according to the present invention can be used for any type of tire, but can suitably be used for a truck or bus tire.

The following is an illustrative explanation of the embodiment(s) of the tire in accordance with the present invention, with reference to the drawings. In each figure, common components are marked with the same reference numerals.

### [First embodiment]

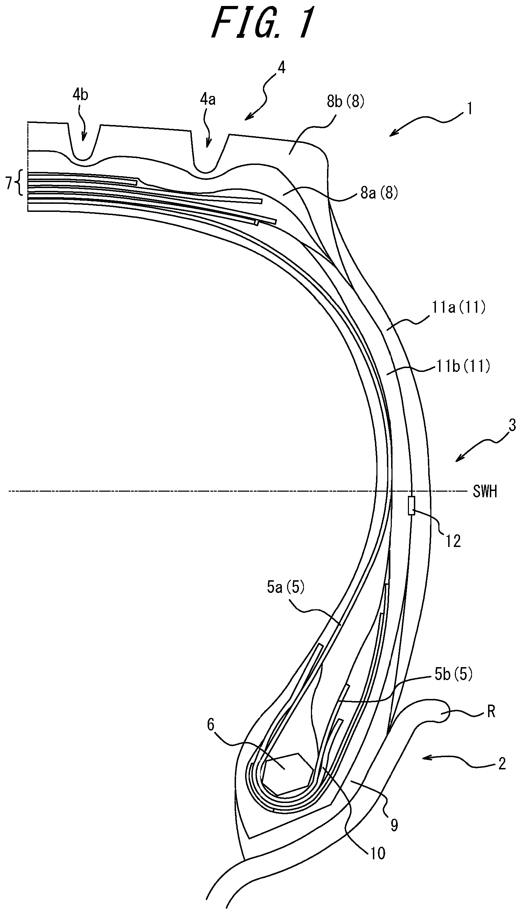

Figure 1 is a cross-sectional view in the tire width direction (half view) of the tire according to one embodiment of the present invention, when mounted on the applicable rim.

As used herein, the term "applicable rim" refers to the standard rim in the applicable size (Measuring Rim in ETRTO's STANDARDS MANUAL and Design Rim in TRA's YEAR BOOK) as described or as may be described in the future in the industrial standard, which is valid for the region in which the tire is produced and used, such as JATMA YEAR BOOK of JATMA (Japan Automobile Tyre Manufacturers Association) in Japan, STANDARDS MANUAL of ETRTO (The European Tyre and Rim Technical Organization) in Europe, and YEAR BOOK of TRA (The Tire and Rim Association, Inc.) in the United States. The "applicable rim" includes current sizes as well as future sizes to be listed in the aforementioned industrial standards. An example of the "size as described in the future" could be the sizes listed as "FUTURE DEVELOPMENTS" in the ETRTO's STANDARDS MANUAL 2013 edition. For sizes not listed in these industrial standards, the term "applicable rim" refers to a rim with a width corresponding to the bead width of the tire.

In addition, the "prescribed internal pressure" refers to the air pressure (maximum air pressure) corresponding to the maximum load capacity of a single wheel in the applicable size and ply rating, as described in the aforementioned JATMA YEAR BOOK and other industrial standards. In the case that the size is not listed in the aforementioned industrial standards, the "prescribed internal pressure" refers to the air pressure (maximum air pressure) corresponding to the maximum load capacity specified for each vehicle in which the tire is mounted.

Note, that the air as used herein can be replaced by inert gas such as nitrogen gas or other inert gas.

In this document, the term "tire maximum width position" means the position in the tire radial direction where the distance in the tire width direction between the carcasses at a pair of sidewall portions is the greatest.

Unless otherwise noted herein, the dimensions of each element, such as distance in the tire width direction, are assumed to be measured in the "reference condition" described below. The "reference condition" refers to the condition in which the tire is assembled on the rim, filled with the above prescribed internal pressure, and unloaded.

The tire 1 comprises a pair of bead portions 2, a pair of sidewall portions 3, a tread portion 4 spanning between both sidewall portions, and a carcass 5 consisting at least one (one in the example in Figure 1) carcass ply extending in a toroidal shape between the pair of bead portions 2. A pair of bead cores 6 are respectively embedded in the pair of bead portions 2. The carcass ply is formed by covering a cord made of steel or organic fiber or other cords with rubber. In the example illustrated in Figure 1, the carcass 5 includes a body portion 5a extending toroidally between the bead cores 6, and a pair of folded portions 5b extending from both ends of the body portion 5a and folded around the pair of bead cores 6 from the inside to the outside in the tire width direction. In the tread portion 4, a belt 7 comprising of a plurality of belt layers and a tread rubber 8 are sequentially disposed outer side of the crown region of the carcass 5 in the tire radial direction, and a plurality of circumferential grooves 4a, etc. extending in the tire circumferential direction are formed on the outer surface of the tread rubber 8, for example.

The tire 1 illustrated in Figure 1 is mounted on the applicable rim R. The tire 1 according to this embodiment may comprises a rubber chaffer 9 disposed on at least a part of the contact portion of the bead portion with the rim R when mounted on the rim R. Also, the tire 1 according to this embodiment may comprise a wire chaffer 10 in the bead portion 2, covering the perimeter of the bead core 6 from the outer side of the carcass.

In the example illustrated in Figure 1, the tread rubber 8 includes a base rubber 8a, and a cap rubber 8b located on the outer side of the base rubber 8a in the tire radial direction, but the tread rubber 8 is not limited to this configuration and may be comprised of one layer of rubber or three or more layers of rubber.

As illustrated in Figure 1, in the tire 1 of this embodiment, two or more layers of side rubber 11 (two layers in the example in Figure 1) are disposed on the outer side of the carcass 5 in the tire width direction so as to straddle the tire maximum width position SWH in the tire radial direction. In the tire 1 of this embodiment, the side rubber 11 includes an outer side rubber 11a on the outer side in the tire width direction and an inner side rubber 11b on the inner side in the tire width direction. The number of layers of the side rubber 11 is not limited as long as there are at least two layers, and can be three or more.

The side rubber 11 is not limited in its arrangement as long as it is disposed to straddle the tire maximum width position SWH in the tire radial direction. In the example illustrated in Figure 1, the side rubbers 11 extend from both ends of the tread portion 4 to the sidewall portions 3.

More specifically, in the example illustrated in Figure 1, the outer edge in the tire radial direction of the outer side rubber 11a partially overlaps with the base rubber 8a and the cap rubber 8b in the tire radial direction, and is disposed to cover the inner edge in the tire radial direction of the cap rubber 8b from the outer side in the tire width direction.

The outer edge in the tire radial direction of the inner side rubber 11b is disposed on the inner side in the tire radial direction than that of the outer side rubber 11a.

Not limited to the above configuration, the outer edge in the tire radial direction of the outer side rubber 11a may be located on the inner side in the tire radial direction than the outer edge in the tire radial direction of the inner side rubber 11b, and so on.

In addition, in the tire 1 of this embodiment, the inner side rubber 11b is in contact with the carcass body portion 5a at the tire maximum width position SWH, however if the side rubber 11 has three or more layers, the layers of side rubber other than the outer side rubber 11a and the inner side rubber 11b may be in contact with the carcass body portion 5a.

In the tire 1 of this embodiment, a communication device 12 is disposed at the boundary of at least one of the two or more layers (in this embodiment, the outer side rubber 11a and inner side rubber 11b) of side rubber 11 (in this embodiment, at the boundary between the outer side rubber 11a and the inner side rubber 11b).

When the side rubber 11 has three or more layers, the communication device 12 may be disposed at any of the boundaries, however from the standpoint of communication performance, it is preferable that one communication device 12 is disposed at least at the outermost boundary in the tire width direction.

The configuration of the communication device 12 is not limited to any particular configuration, as long as the communication device 12 is capable of wireless communication with a predetermined device outside the tire 1. The communication device 12 can be, for example, an RF tag. The RF tag is also referred to as an RFID (Radio Frequency Identification) tag. The communication device 12 may be configured with an IC chip 13, which comprises a control section and a storage section, and one or more antennas 12a connected to the IC chip 13. For example, the communication device 12 may have an overall longitudinal shape with two antennas which extend in a straight, wavy, or spiral shape in opposite directions from the IC chip 13.

The IC chip may also be operated by induced electromotive force generated by electromagnetic waves received by the one or more antennas. In other words, the communication device 12 may be a passive communication device. Alternatively, the communication device 12 may be further provided with a battery, so that to be able to communicate by generating electromagnetic waves using its own power. In other words, the communication device 12 may be an active communication device.

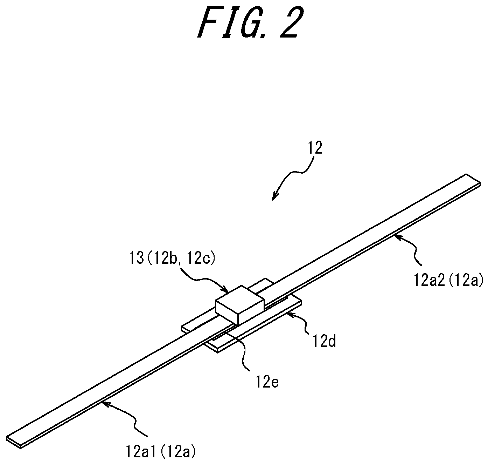

Figure 2 is a perspective view of an RF tag as a communication device 12 to be disposed on the tire 1. As illustrated in Figure 2, the RF tag as a communication device 12 to be disposed on the tire 1 in this embodiment comprises: a first antenna 12a1 and a second antenna 12a2 which constitute the antenna 12a; an IC chip 13 which constitutes the control section 12b and the storage section 12c, and operated by induced electromotive force generated by radio waves received by these first antenna 12a1 and second antenna 12a2; the plate-like support member 12d to which the IC chip 13 is attached; and a conductive member 12e electrically connecting the IC chip 13 and each of the first antenna 12a1 and the second antenna 12a2.

The communication device 12 may be covered by coated rubber.

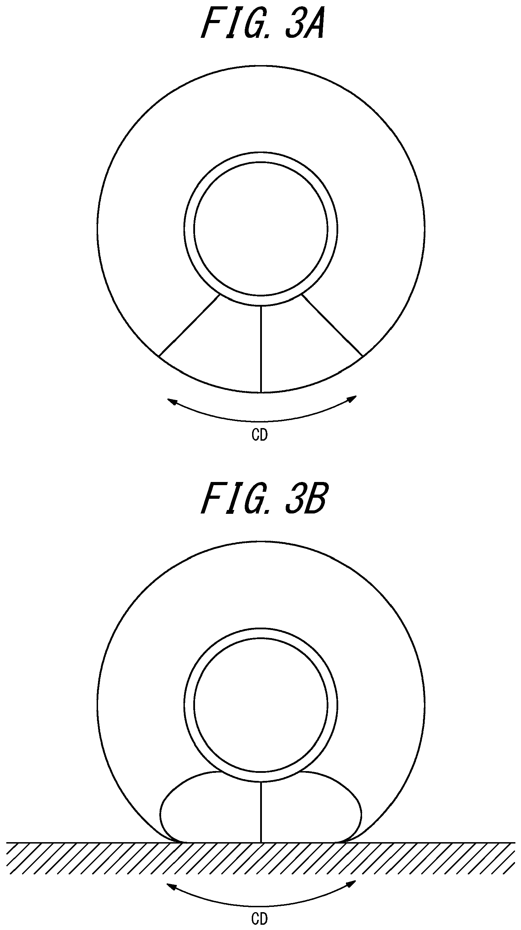

The effects of the configuration of the tire 1 according to this embodiment are explained below with reference to Figure 3.

Figure 3 is a schematic cross-sectional view in the tire circumferential direction of the tire to illustrate the behavior of the cords of the carcass plies during tire rolling. Figure 3A illustrates the tire in the reference condition, and Figure 3B illustrates the tire during tire rolling under a predetermined load. In the example illustrated in the figures, three cords are depicted schematically, as opposed to the actual number of cords in the carcass ply.

In Figure 3, the tire circumferential direction is indicated by the arrow CD for convenience of explanation.

As illustrated in Figure 3A, in the reference condition, the cords of the carcass ply extend radially from the rim, in the tire circumferential cross-section. When the tire is rolled with a predetermined load applied from the above reference state, as illustrated in Figure 3B, the cords of the carcass ply are deformed in the contact patch to become convex in one side in the tire circumferential direction. Thus, when the communication device is disposed so that a part of the communication device is in contact with the cord of the carcass ply, as in the conventional technology, the durability of the communication device may be compromised as the cord of the carcass ply is deformed to one side in the tire circumferential direction.

Therefore, in the tire 1 of this embodiment, by disposing the communication device 12 at the boundary between the two layers of outer side rubber 11a and the inner side rubber 11b, the communication device 12 can be sandwiched between the two different layers of rubber to mitigate the effects of deformation of the carcass ply cords. This can ensure sufficient durability of the communication device 12.

The bead core 6 and its vicinity tend to have more metal members, such as the bead core 6 and the wire chafer 10, than the sidewall portion 3, and these metal members may cause the communication performance to be more unstable than the sidewall portion 3. The side rubber in which the communication device 12 is sandwiched is generally located outer side in the tire radial direction than the area with more metal members described above, and by disposing the communication device 12 at the boundary of the side rubber 11, sufficient communication performance of the communication device 12 can also be ensured.

In addition, by using two or more layers of side rubber 11 of different rubber types (the outer side rubber 11a and the inner side rubber 11b in this embodiment), it is easier, than if the side rubber were made of one type of rubber, to make the adjustments according to the performance requirements of the tire and the driving environment, while ensuring sufficient durability of the communication device 12.

The following is a description of each component of the tire 1 according to the first embodiment, including its suitable configuration.

In the tire 1 of this invention, the two or more layers of side rubber 11 have a lower relative permittivity in the outer side rubber 11a, which is the outer layer in the tire width direction, than in the inner side rubber 11b, which is the inner layer in the tire width direction.

When there are three or more layers of side rubber 11, the relative permittivity of the outermost side rubber in the tire width direction is preferably the lowest from the standpoint of communication performance.

Here, the relative permittivity of the rubber can be changed as needed by adjusting the amount of carbon blended in the rubber, etc. However, the method of adjusting the relative permittivity is not particularly limited.

By disposing the outer side rubber 11a, which has a relatively low relative permittivity, at outer side in the tire width direction, the communication device 12 can effectively ensure adequate communication performance with a given device outside the tire 1.

In the tire 1 of this embodiment, it is preferable that the two or more layers of side rubber 11 (in this embodiment, outer side rubber 11a and inner side rubber 11b) have a lower hardness in the outer side rubber 11a, which is the outer layer in the tire width direction, than in the inner side rubber 11b, which is the inner layer in the tire width direction.

According to the above configuration, the inner side in the tire width direction of the side rubber 11 has relatively high rigidity, and deformation such as bending of the entire tire is suppressed during rolling under a predetermined load applied to the tire. This would also mitigate the effects of tire deformation on the communication device 12, making it easier to ensure sufficient durability of the communication device 12 over the long term.

When there are three or more layers of side rubber 11, the hardness of the innermost side rubber in the tire width direction is preferably the highest from the standpoint of ensuring the long-term durability of the communication device 12.

Here, the hardness of rubber means the JIS-A hardness measured under room temperature of 23°C, using a Type A durometer (Type A) in accordance with JIS K6253.

In the tire 1 of this embodiment, it is preferable that the two or more layers of side rubber 11 (in this embodiment, outer side rubber 11a and inner side rubber 11b) have a lower carbon content in the outer side rubber 11a, which is the outer layer in the tire width direction, than in the inner side rubber 11b, which is the inner layer in the tire width direction.

Since carbon may be one of the factors that increase the relative permittivity of the rubber, the relatively low carbon content of the outer side rubber 11a can suppress the increase in the permittivity of the rubber and effectively ensure sufficient communication performance of the communication device 12.

When there are three or more layers of side rubber 11, it is suitable for the outermost side rubber in the tire width direction to have the lowest carbon content from the standpoint of communication performance.

Here, carbon can be any known material and is not limited. For example, carbon black, including any hard carbon and soft carbon produced by the oil furnace method, can be used.

In the tire 1 of this embodiment, the communication device 12 is not limited with respect to the position in the tire radial direction as long as it is disposed at the boundary between the outer side rubber 11a and the inner side rubber 11b. The tire 1 may comprise a rubber chaffer 9, as described above, disposed on at least a part of the contact portion of the bead portion 2 with a rim R. In this case, the communication device 12 is preferably disposed outer side of the rubber chafer 9 in the tire radial direction.

The effects of the above configuration are described below.

The bead core 6 and its vicinity tend to have more metal members, such as the bead core 6 and the wire chafer 10, than the sidewall portion 3, and these metal members may cause the communication performance to be more unstable than the sidewall portion 3. The side rubber in which the communication device 12 is sandwiched is generally located outer side in the tire radial direction than the area with more metal members described above, and by disposing the communication device 12 at the boundary of the side rubber 11, sufficient communication performance of the communication device 12 can also be ensured.

The orientation of the arrangement of the communication device 12 is not limited, but when the communication device 12 has the longitudinal shape illustrated in Figure 2, for example, the first antenna 12a1 and the second antenna 12a2 can be arranged so that their longitudinal directions are along the tire circumferential direction. Here, "along the tire circumferential direction" shall include cases where the longitudinal direction of the antenna is parallel to the tire circumferential direction or slightly inclined with respect to the tire circumferential direction (e.g., an inclination angle of 5° or less with respect to the tire circumferential direction).

In the tire 1 of this embodiment, it is preferable that the two or more layers of side rubber 11 (in this embodiment, outer side rubber 11a and inner side rubber 11b) have a higher content of anti-aging agent in the outer side rubber 11a, which is the outer layer in the tire width direction, than in the inner side rubber 11b, which is the inner layer in the tire width direction.

The anti-aging agents are blended into the tire rubber to prevent deterioration of rubber due to external influences such as oxygen and ozone. However, if the communication device 12 is disposed between the carcass ply and the side rubber, or embedded in the side rubber with high anti-aging agent content, over the long term, the components of the anti-aging agent may affect the communication device 12 from the area of contact with the rubber. Nevertheless, it is difficult to reduce the amount of anti-aging agent in externally sensitive areas of the tire in order to prevent side rubber degradation. Therefore, by making the anti-aging agent content of the outer side rubber 11a relatively high, the communication device 12 will be in contact with both the rubber with relatively high anti-aging agent content and the rubber with relatively low anti-aging agent content, thereby reducing the contact area between the communication device 12 and the rubber with relatively high anti-aging agent content and mitigating the risk of the anti-aging agent affecting the communication device 12. Furthermore, the anti-aging agent can be placed in areas of the tire that are susceptible to external influences, thereby effectively preventing deterioration of the tire due to external influences.

When there are three or more layers of side rubber 11, it is suitable for the outermost side rubber in the tire width direction to have the highest content of anti-aging agent from standpoint of effectively preventing deterioration of the rubber.

Here, the anti-aging agent is not particularly limited, and any known anti-aging agent can be used. For example, phenolic anti-aging agents, imidazole anti-aging agents, amine anti-aging agents, etc. can be mentioned. These anti-aging agents can be used alone or in combination of two or more.

### [Second embodiment]

Next, the tire according to the other embodiment of this invention (the second embodiment) will be described with reference to Figure 1. The tire 1 of the second embodiment has the same configuration as the tire of the first embodiment, except that the rubber used for the side rubber 11 has a different configuration with respect to the suitable hardness and carbon content, and the description of the configuration similar to that of the first embodiment is omitted.

In the second embodiment of the tire 1, it is preferable that two or more layers of side rubber 11 (in this embodiment, outer side rubber 11a and inner side rubber 11b) have a higher hardness in the outer layer in the tire width direction than in the inner layer in the tire width direction.

According to the above configuration, rubber of relatively lower hardness is disposed inner side in the tire width direction than the communication device 12, which further mitigates the effect of deformation of the carcass ply cords during tire rolling and effectively ensures sufficient durability of the communication device 12.

In addition, by increasing the hardness of the outer side rubber 11a, which is relatively disposed on the outer side in the tire width direction, the cut resistance and wear resistance, etc. against external inputs to the tire during the tire running can be sufficiently ensured. Therefore, the communication device 12 can be prevented from being damaged by external influences from outside the tire.

When there are three or more layers of side rubbers 11, from the viewpoint of mitigating the effects of deformation of the cords of the carcass ply and effectively preventing external influences on the communication device 12, it is suitable that the hardness of the outermost side rubber in the tire width direction is the highest and that of the side rubber closest to the carcass ply in the tire width direction is the lowest.

In the second embodiment of the tire 1, it is preferable that two or more layers of side rubber 11 (in this embodiment, outer side rubber 11a and inner side rubber 11b) have a higher carbon content in the outer layer in the tire width direction than in the inner layer in the tire width direction.

One effect of increasing the carbon content is to increase the hardness of the rubber that forms the tire. Therefore, by increasing the carbon content of the outer side rubber 11a, which is relatively disposed on the outer side in the tire width direction, the hardness of the outer side rubber 11a can be increased to ensure sufficient cut resistance and wear resistance, etc. against external inputs to the tire during the tire running. Therefore, the communication device 12 can be prevented from being damaged by external influences from outside the tire.

When there are three or more layers of side rubbers 11, from the viewpoint of mitigating the effects of deformation of the cords of the carcass ply and effectively preventing external influences on the communication device 12, it is suitable that the hardness of the outermost side rubber in the tire width direction is the highest and that of the side rubber closest to the carcass ply in the tire width direction is the lowest.

In the tire 1 according to the second embodiment, the carbon content of the outer side rubber 11a, which is the outer layer in the tire width direction, may be equal to or less than that of the inner side rubber 11b, which is the inner layer in the tire width direction. In this case, two or more layers of side rubber 11 (in this embodiment, outer side rubber 11a and inner side rubber 11b) preferably have a higher silica content in the outer side rubber 11a, which is the layer outer layer in the tire width direction, than in the inner side rubber 11b, which is the inner layer in the tire width direction.

According to the above configuration, the rolling resistance of the tire can be reduced, and sufficient wet performance can be ensured, without compromising the communication performance of the tire.

When there are three or more layers of side rubbers 11, it is suitable to have the highest silica content in the outermost side rubber in the tire width direction from the standpoint of achieving compatibility between the communication performance of the tire and the performance of the tire itself.

### INDUSTRIAL APPLICABILITY

The tire of the present invention can be used for any type of tire, but can suitably be used for a truck or bus tire.

### REFERENCE SIGNS LIST

- 1: Tire
- 2: Bead portion
- 3: Sidewall portion
- 4: Tread portion
- 4a: Circumferential groove
- 5: Carcass
- 5a: Body portion
- 5b: Folded portion
- 6: Bead core
- 7: Belt
- 8: Tread portion
- 8a: Base rubber
- 8b: Cap rubber
- 9: Rubber chaffer
- 10: Wire chaffer
- 11: Side rubber
- 11a: Outer side rubber
- 11b: Inner side rubber
- 12: Communication device
- 12a: Antenna
- 12a1: First antenna
- 12a2: Second antenna
- 12b: Control section
- 12c: Storage section
- 12d: Support member
- 12e: Conductive member
- 13: IC chip

## Claims

1. A tire (1) comprising a pair of bead portions (2), a pair of sidewall portions (3), a tread portion (4) spanning between both sidewall portions (4), and a carcass (5) consisting of at least one carcass ply extending in a toroidal shape between the pair of bead portions (2), wherein the tire (1) comprises:
two or more layers of side rubbers (11) of different rubber types, each of which is disposed on the outer side of the carcass (5) in the tire width direction so as to straddle the tire maximum width position in the tire radial direction, and
a communication device (12) disposed at a boundary of at least one of the two or more layers of side rubber (11),
the tire being **characterized in that**
the two or more layers of side rubber (11) have a lower relative permittivity in the outer layer (11a) in the tire width direction than in the inner layer (11b) in the tire width direction.

2. The tire (1) according to claim 1, wherein the two or more layers of side rubber (11) have a lower hardness in the outer layer (11a) in the tire width direction than in the inner layer (11b) in the tire width direction, wherein the hardness of rubber means the JIS-A hardness measured under room temperature of 23°C, using a Type A durometer (Type A) in accordance with JIS K6253.

3. The tire (1) according to any one of claims 1 or 2, wherein the two or more layers of side rubber (11) have a lower carbon content in the outer layer (11a) in the tire width direction than in the inner layer (11b) in the tire width direction.

4. The tire (1) according to claim 1, wherein the two or more layers of side rubber (11) have a higher hardness in the outer layer (11a) in the tire width direction than in the inner layer (11b) in the tire width direction, wherein the hardness of rubber means the JIS-A hardness measured under room temperature of 23°C, using a Type A durometer (Type A) in accordance with JIS K6253.

5. The tire (1) according to claim 1 or 4, wherein the two or more layers of side rubber (11) have a higher carbon content in the outer layer (11a) in the tire width direction than in the inner layer (11b) in the tire width direction.

6. The tire (1) according to any one of claims 1 to 5, wherein the tire (1) comprises a rubber chaffer (9) disposed on at least a part of contact portion of the bead portion (2) with a rim, and
the communication device (12) is disposed outer side of the rubber chafer (9) in the tire radial direction.

7. The tire (1) according to any one of claims 1 to 6, wherein the two or more layers of side rubbers (11) have a higher content of anti-aging agent in the outer layer (11a) in the tire width direction than in the inner layer (11b) in the tire width direction.

8. The tire (1) according to any one of claims 1 to 7, wherein the communication device (12) is an RF tag.

## Patentansprüche

1. Reifen (1), umfassend ein Paar von Wulstabschnitten (2), ein Paar von Seitenwandabschnitten (3), einen Laufflächenabschnitt (4), der sich zwischen den beiden Seitenwandabschnitten (4) spannt, und eine Karkasse (5), die aus mindestens einer Karkassenlage besteht, die sich in einer kreisringartigen Form zwischen dem Paar von Wulstabschnitten erstreckt (2), wobei der Reifen (1) Folgendes umfasst:
zwei oder mehr Schichten von Seitengummis (11) aus unterschiedlichen Gummiarten, deren jede so auf der in der Reifenbreitenrichtung äußeren Seite der Karkasse (5) angeordnet ist, dass sie die Position maximaler Reifenbreite in der Reifenradialrichtung überspannt, und
eine Kommunikationseinrichtung (12), die an einem Rand mindestens einer von den zwei oder mehr Schichten von Seitengummi (11) angeordnet ist,
wobei der Reifen **dadurch gekennzeichnet ist, dass**
die zwei oder mehr Schichten von Seitengummi (11) eine niedrigere relative Dielektrizitätskonstante in der in der Reifenbreitenrichtung äußeren Schicht (11a) als in der in der Reifenbreitenrichtung inneren Schicht (11b) aufweisen.

2. Reifen (1) nach Anspruch 1, wobei die zwei oder mehr Schichten von Seitengummi (11) eine niedrigere Härte in der in der Reifenbreitenrichtung äußeren Schicht (11a) als in der in der Reifenbreitenrichtung inneren Schicht (11b) aufweisen, wobei die Härte von Gummi die JIS-A-Härte bedeutet, gemessen unter einer Raumtemperatur von 23 °C, unter Verwendung eines Typ-A-Durometers (Typ A) entsprechend JIS K6253.

3. Reifen (1) nach Anspruch 1 oder 2, wobei die zwei oder mehr Schichten von Seitengummi (11) einen niedrigeren Kohlenstoffgehalt in der in der Reifenbreitenrichtung äußeren Schicht (11a) als in der in der Reifenbreitenrichtung inneren Schicht (11b) aufweisen.

4. Reifen (1) nach Anspruch 1, wobei die zwei oder mehr Schichten von Seitengummi (11) eine höhere Härte in der in der Reifenbreitenrichtung äußeren Schicht (11a) als in der in der Reifenbreitenrichtung inneren Schicht (11b) aufweisen, wobei die Härte von Gummi die JIS-A-Härte bedeutet, gemessen unter einer Raumtemperatur von 23 °C, unter Verwendung eines Typ-A-Durometers (Typ A) entsprechend JIS K6253.

5. Reifen (1) nach Anspruch 1 oder 4, wobei die zwei oder mehr Schichten von Seitengummi (11) einen höheren Kohlenstoffgehalt in der in der Reifenbreitenrichtung äußeren Schicht (11a) als in der in der Reifenbreitenrichtung inneren Schicht (11b) aufweisen.

6. Reifen (1) nach einem der Ansprüche 1 bis 5, wobei der Reifen (1) ein Gummi-Wulstschutzband (9) umfasst, das auf mindestens einem Teil eines Kontaktabschnitts des Wulstabschnitts (2) mit einer Felge angeordnet ist, und
die Kommunikationseinrichtung (12) auf der in der Reifenradialrichtung äußeren Seite des Gummi-Wulstschutzbandes (9) angeordnet ist.

7. Reifen (1) nach einem der Ansprüche 1 bis 6, wobei die zwei oder mehr Schichten von Seitengummi (11) einen höheren Gehalt von Alterungsschutzwirkstoff in der in der Reifenbreitenrichtung äußeren Schicht (11a) als in der in der Reifenbreitenrichtung inneren Schicht (11b) aufweisen.

8. Reifen (1) nach einem der Ansprüche 1 bis 7, wobei die Kommunikationseinrichtung (12) ein HF-Etikett ist.

## Revendications

1. Pneu (1) comprenant une paire de parties de talon (2), une paire de parties de flanc (3), une partie de bande de roulement (4) s'étendant entre les deux parties de flanc (4), et une carcasse (5) composée d'au moins une nappe de carcasse s'étendant selon une forme toroïdale entre les deux parties de talon (2), le pneu (1) comprenant :
au moins deux couches de caoutchoucs de flanc (11) de différents types de caoutchouc, chacune d'entre elles étant disposée sur le côté extérieur de la carcasse (5) dans le sens de la largeur du pneu de façon à enjamber la position de largeur maximale du pneu dans le sens radial du pneu, et
un dispositif de communication (12) disposé au niveau d'une limite d'au moins une des au moins deux couches de caoutchouc de flanc (11) ;
le pneu étant **caractérisé en ce que**
les au moins deux couches de caoutchouc de flanc (11) présentent une permittivité relative, dans la couche extérieure (1 1a) dans le sens de la largeur du pneu, qui est inférieure à celle de la couche intérieure (11b) dans le sens de la largeur du pneu.

2. Pneu (1) selon la revendication 1, dans lequel les au moins deux couches de caoutchouc de flanc (11) ont une dureté, dans la couche extérieure (11a) dans le sens de la largeur du pneu, qui est inférieure à celle de la couche intérieure (11b) dans le sens de la largeur du pneu, la dureté du caoutchouc étant la dureté JIS-A mesurée à une température ambiante de 23 °C à l'aide d'un duromètre de type A selon la norme JIS K 6253.

3. Pneu (1) selon l'une quelconque des revendications 1 et 2, dans lequel les au moins deux couches de caoutchouc de flanc (1) ont une teneur en carbone, dans la couche extérieure (11a) dans le sens de la largeur du pneu, qui est inférieure à celle de la couche intérieure (11b) dans le sens de la largeur du pneu.

4. Pneu (1) selon la revendication 1, dans lequel les au moins deux couches de caoutchouc de flanc (11) ont une dureté, dans la couche extérieure (11a) dans le sens de la largeur du pneu, qui est supérieure à celle de la couche intérieure (11b) dans le sens de la largeur du pneu, la dureté du caoutchouc étant la dureté JIS-A mesurée à une température ambiante de 23 °C à l'aide d'un duromètre de type A selon la norme JIS K 6253.

5. Pneu (1) selon la revendication 1 ou 4, dans lequel les au moins deux couches de caoutchouc de flanc (1) ont une teneur en carbone, dans la couche extérieure (11a) dans le sens de la largeur du pneu, qui est supérieure à celle de la couche intérieure (11b) dans le sens de la largeur du pneu.

6. Pneu (1) selon l'une quelconque des revendications 1 à 5, dans lequel le pneu (1) comprend une bandelette talon en caoutchouc (9) disposée sur au moins une portion d'une partie de contact de la partie de talon (2) avec une jante, et
le dispositif de communication (12) est disposé sur le côté extérieur de la bandelette talon en caoutchouc (9) dans le sens radial du pneu.

7. Pneu (1) selon l'une quelconque des revendications 1 à 6, dans lequel les au moins deux couches de caoutchoucs de flanc (11) ont une teneur en agent antivieillissement, dans la couche extérieure (11a) dans le sens de la largeur du pneu, qui est supérieure à celle de la couche intérieure (11b) dans le sens de la largeur du pneu.

8. Pneu (1) selon l'une quelconque des revendications 1 à 7, dans lequel le dispositif de communication (12) est une étiquette radiofréquence.
